# EUROPÄISCHE PATENTSCHRIFT

(11) **EP 2 603 910 B1**
(45) Veröffentlichungstag und Bekanntmachung des Hinweises auf die Patenterteilung: **27.05.2020**
(21) Anmeldenummer: 11757749.4
(22) Anmeldetag: 30.07.2011
(51) Int. Cl.: G09F 3/02, G09F 3/10, G09F 3/03, C09J 7/29, B42D 15/00

(54) **SICHERHEITSETIKETT ODER -KLEBEBAND MIT MANIPULATIONSNACHWEIS**
SAFETY LABEL OR ADHESIVE TAPE WITH EVIDENCE OF TAMPERING
ÉTIQUETTE OU BANDE ADHÉSIVE DE SÉCURITÉ DOTÉE D'UN INDICATEUR D'INVIOLABILITÉ

(30) Priorität: 13.08.2010 AT 13552010
(43) Veröffentlichungstag der Anmeldung: 19.06.2013
(73) Patentinhaber: Hueck Folien Gesellschaft m.b.H., 4342 Baumgartenberg (AT)
(72) Erfinder: MAYRHOFER, Marco, 4342 Baumgartenberg (AT); AIGNER, Georg, A-4363 Pabneukirchen (AT)
(74) Vertreter: KLIMENT & HENHAPEL
(86) Internationale Anmeldenummer: PCT/EP2011/003833
(87) Internationale Veröffentlichungsnummer: WO 2012/019721

(56) Entgegenhaltungen:
- EP-A1- 1 972 674
- EP-A1- 2 130 884
- WO-A1-01/93231
- US-A1- 2002 191 234

## Beschreibung

Die Erfindung betrifft ein Sicherheitsetikett oder -klebeband mit Manipulationsnachweis, das ein optisch aktives Sicherheitsmerkmal und ein optisches Merkmal aufweist.

Unter einem optisch aktiven Merkmal werden hier Beugungsstrukturen, Beugungsgitter, Oberflächenreliefs, Hologramme, Kinegramme und dergleichen verstanden.

Sicherheitsetiketten oder -klebebänder im Sinne der vorliegenden Erfindung erfüllen zwei Aufgaben: Einerseits soll das Etikett oder Klebeband die Authentizität eines Produktes oder die Integrität einer Verpackung durch die Bereitstellung eines optisch aktiven Sicherheitsmerkmals sicherstellen. Bevorzugt werden zu diesem Zweck Hologramme eingesetzt, die im Bereich des Produktschutzes gut etabliert sind und daher einen hohen Grad an Akzeptanz, Wiedererkennbarkeit und Sicherheit bieten. Andererseits soll jedoch ein Manipulationsversuch, also ein unbefugter Versuch, das Etikett oder Klebeband abzulösen, deutlich erkennbar sein. Letztere Maßnahme stellt sicher, dass dem Benutzer glaubhaft versichert werden kann, dass ein mit einem solchen Etikett oder Klebeband geschütztes Produkt echt und originalverpackt ist.

Typische Hologramme, die bereits heute im Produktschutz und als Sicherheitsmerkmale für Wertdokumente eingesetzt werden, haben üblicherweise eine metallisch glänzende Grunderscheinung, die bei Veränderung des Betrachtungswinkels durch Lichtbeugung an den Strukturen des Hologramms ein Spiel von Regenbogenfarben erzeugt. Diese diffraktiven Effekte sind jedoch stets sehr ähnlich und alle solchen Produkten ist der metallische Glanz gemein. Es besteht daher der Bedarf nach neuen optisch variablen Effekten, die sich von den herkömmlichen nicht nur durch das Motiv des Hologramms, sondern auch durch die Grundfarbe bzw. einen unterschiedlichen Glanz unterscheiden.

Aus KR 10079525 ist eine Hologrammfolie sowie ein Verfahren zu deren Herstellung bekannt. Der Aufbau besteht dabei aus einem Trägersubstrat, einer Releaseschicht, einer geprägten Schicht (Hologrammschicht), einer partiellen Metallschicht, einer Maskierungsschicht, einer Druckschicht und einer Klebeschicht. Die Druckschicht und die Klebeschicht weisen dabei unterschiedliche fluoreszierende Merkmale auf. Ein Manipulationsnachweis ist bei diesem Aufbau nicht möglich.

Weiters sind aus dekorativen Anwendungen bzw. Verpackungsanwendungen sogenannte Dry Peel Etiketten bekannt. Diese zeichnen sich dadurch aus, dass das Etikett aus zwei Teilen besteht, die sich leicht voneinander trennen lassen. Nach dem Aufkleben des Etiketts auf ein Objekt sind diese beiden Teile zunächst noch verbunden. Entfernt man nun den oberen Teil des Etiketts, der oft einen Anfasszipfel oder ähnliches aufweist, verbleibt der untere Teil des Etiketts samt der Selbstklebebeschichtung auf dem Objekt. Die Selbstklebebeschichtung ist jedoch auf der dem Objekt abgewandten Seite durch eine Folie oder eine Lackschicht abgedeckt, sodass sich der auf dem Objekt verbleibende Teil nicht mehr klebrig ("Dry") anfühlt. Des Weiteren ist es durch diese spezielle Ausführung praktisch unmöglich, den abgezogenen Teil des Etiketts wieder aufzukleben, da auch der abgezogene Teil nicht mehr klebrig ist.

Auch Kombinationen von solchen Dry Peel Etiketten mit einem Manipulationsnachweis sind beispielsweise aus der EP-A 1 113 059 bekannt. Das dort beschriebene Etikett oder Klebeband weist jedoch keine optisch aktiven Sicherheitsmerkmale auf.

In US2002191234 befinden sich das Reliefhologramm 12 und die partielle Trennlackschicht 15 auf unterschiedlichen, einander gegenüberliegenden Oberflächen eines zusätzlichen Trägersubstrats 14. Der Nachteil dieses Sicherheitsetiketts liegt darin, dass bei einem Manipulationsversuch die große Gefahr besteht, dass eine Trennung der Schichten nicht unbedingt im Bereich der Releaseschicht, sondern auch im Bereich des Hologrammaufbaus, insbesondere im Bereich der Kleberschicht 17 mit dem der Aufbau auf dem Trägersubstrat 14 befestigt ist, erfolgt. Dabei wäre dann ein Manipulationsnachweis nicht eindeutig gegeben, da in diesem Fall keine Trennung in einer Schicht, mit Verbleib von Teilen dieser Schicht auf dem abgezogenen Teil und Teilen der Schicht, die auf dem zu sichernden Gegenstand verbleiben, erfolgt. Außerdem weist das Etikett durch die Verwendung des Trägersubstrats 14 ein hohe Dicke auf.

Aufgabe der Erfindung war es daher, ein Sicherheitsetikett oder -klebeband bereitzustellen, das sowohl ein optisch aktives Sicherheitselement als auch einen optisch erkennbaren Manipulationsnachweis aufweist und sich im optischen Gesamteindruck von herkömmlichen metallisch glänzenden optisch aktiven Strukturen unterscheidet, wobei nach dem Auslösen des Manipulationsnachweises weder der abgezogene Teil noch der am zu sichernden Objekt verbleibende Teil des Etiketts oder Klebebandes klebrig sind.

Gegenstand der Erfindung ist daher ein Sicherheitsetikett oder -klebeband mit Manipulationsnachweis aufweisend ein flexibles Trägersubstrat auf Basis einer flexiblen Kunststofffolie, dadurch gekennzeichnet, dass auf eine Oberfläche des Trägersubstrats folgende Schichten aufgebracht sind:
a) eine geprägte Lackschicht
b) eine semitransparente Metallschicht bzw. eine Schicht mit hohem Brechungsindex
c) eine erste, partielle Trennlackschicht in Form von Buchstaben, Zeichen, Symbolen, Linien, Guillochen, Zahlen oder Schriftzügen,
d) eine oder mehrere Lackschicht(en) mit optischen Eigenschaften,
e) eine zweite, vollflächige Trennlackschicht
f) eine weitere vollflächige Lackschicht
g) eine Selbstklebebeschichtung,
wobei in den nicht mit der Trennlackschicht c) beschichteten Bereichen
die Haftung aller Schichten untereinander und die Haftung der Schicht g) zum zu sichernden Objekt größer sind als die Haftung der Schicht d) zur Schicht e) oder der Schicht e) zur Schicht f)
und wobei
in den mit der Trennlackschicht c) beschichteten Bereichen
die Haftung aller Schichten untereinander und die Haftung der Schicht g) zum zu sichernden Objekt größer sind als die Haftung der Schicht b) zur Schicht c) oder der Schicht c) zur Schicht d)
und wobei insbesondere
die Haftung der Schicht b) zur Schicht c) oder der Schicht c) zur Schicht d) geringer ist als die Haftung sowohl der Schicht d) zur Schicht e) als auch der Schicht e) zur Schicht f).

Als Trägersubstrat kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC, Fluorpolymere, wie Teflon und dergleichen in Frage. Die Trägerfolien weisen vorzugsweise eine Dicke von 5 - 700 µm, bevorzugt 5 - 200 µm, besonders bevorzugt 5 - 100 µm auf.

Auf eine Oberfläche des Trägersubstrats wird im ersten Schritt eine Lackschicht a) aufgebracht, die im selben Arbeitsgang oder in einem nachfolgenden Prozess geprägt wird. Die Haftung der Lackschicht a) zum Trägersubstrat muss so gut sein, dass weder beim Ablösen des Etiketts von einem Liner oder beim Abrollen des Klebebandes noch beim Auslösen des Manipulationsnachweises der Schichtverbund entlang dieser Grenzfläche trennt.

Ist die Haftung der Lackschicht a) zum Trägersubstrat ohne weitere Maßnahmen nicht groß genug, so kann auf das Trägersubstrat vor der Lackierung mit der Schicht a) eine Haftvermittlerschicht aufgebracht sein, die die Haftung der Lackschicht a) zum Trägersubstrat verbessert. Alternativ kann ein entsprechend chemisch oder physikalisch vorbehandeltes Trägersubstrat eingesetzt werden.

Es kann jedoch durchaus gewünscht sein, dass der Schichtverbund an der Grenzfläche zwischen Schicht a) und dem Trägersubstrat trennt, z.B. wenn das Etikett als sogenanntes Transferetikett ausgeführt wird. In dieser Ausführungsform der Erfindung ist die Haftung zwischen Schicht a) und dem Trägersubstrat geringer als die Haftung der Schichten a) bis g) untereinander. Nach Aufbringen des Etiketts auf einen Gegenstand mittels der Klebeschicht kann das Trägersubstrat abgezogen werden, ohne einen Manipulationsnachweis auszulösen. Dieser Manipulationsnachweis erfolgt dann z.B. durch den sogenannten Tesa-Test, indem ein Klebeband oder ein weiteres Etikett auf den am Gegenstand verbliebenen Schichtaufbau geklebt wird und wieder abgezogen wird. Dabei wird der Manipulationsnachweis ausgelöst und ein Teil der Schichten gemäß Anspruch 1 wieder abgezogen.

Zur Herabsetzung der Haftung kann das Trägersubstrat beispielsweise mit einer Releaseschicht versehen werden. Weist die geprägte Lackschicht a) bereits ohne weitere Maßnahmen eine schlechte Haftung zum Trägersubstrat auf, ist für die Anwendung als Transferetikett keine Releaseschicht notwendig. Als Releaseschichten kommen insbesondere bekannte schlecht haftende Lackzusammensetzungen, beispielsweise auf Methacrylatbasis in Frage. Ferner können auch sehr dünn aufgetragene Ölschichten, Polyamid-, Polyethylen-, Silikon- oder Fluorpolymerwachsschichten als Releaseschicht verwendet werden. Anschließend wird wie oben beschrieben die Lackschicht a) aufgebracht.

Die Lackschicht a) weist auf der dem Trägersubstrat abgewandten Oberfläche eine Oberflächenstruktur auf, beispielsweise ein Oberflächenrelief, ein Hologramm, eine Beugungsstruktur oder ein Beugungsgitter. Diese Struktur kann mittels bekannter Heißpräge- oder UV-Prägeverfahren durch Abformung von auf einem Prägewerkzeug vorhandenen Strukturen erzeugt werden. Bei Verwendung eines Heißprägeverfahrens ist die Lackschicht a) eine thermoplastische Lackschicht, beim Einsatz eines UV-Prägeverfahrens ist die Lackschicht a) strahlungshärtend. Derartige Prägeverfahren sind dem Fachmann hinlänglich bekannt, bzw. in der EP-A 1 310 381 offenbart, deren Inhalt hiermit vollumfänglich in die gegenständliche Anmeldung aufgenommen wird.

Die Schichtdicke der aufgebrachten Lackschicht a) kann je nach Anforderung an das Endprodukt und Dicke des Substrats variieren und beträgt im Allgemeinen zwischen 0,5 und 50 µm, vorzugsweise zwischen 2 und 10 µm, besonders bevorzugt zwischen 2 und 5 µm.

Die Lackschicht a) wird durch ein Beschichtungsverfahren, wie z.B. Sprühen, Gießen, Curtain Coating, Schlitzdüsenbeschichtung, Tauchen, Aufrakeln oder ein Druckverfahren, beispielsweise Tief-, Flexo-, Offset-, Sieb- oder Digitaldruck vollflächig oder partiell aufgebracht.

Anschließend wird auf die Lackschicht a) eine semitransparente metallische Schicht oder eine Schicht mit hohem Brechungsindex b) aufgebracht.

Die semitransparente metallische Schicht b) weist eine optische Dichte von etwa 0,1 bis 1,3, bevorzugt von 0,1 bis 0,8 auf. Bei einer solchen optischen Dichte ist gewährleistet, dass die Schicht noch hinreichend transparent ist, um den Betrachter noch die dahinterliegenden Schichten erkennen zu lassen.

Als semitransparente metallische Schichten kommen beispielsweise Schichten aus einem Metall, oder einer Legierung in Frage. Als Metallschicht sind Schichten aus AI, Cu, Fe, Ag, Au, Cr, Ni, Zn, Sn, Pt, Ti, Pd und dergleichen geeignet. Geeignete Legierungen sind beispielsweise Cu-Al Legierungen, Cu-Zn Legierungen und dergleichen.
Die metallische Schicht wird bevorzugt durch einen PVD- oder CVD- Prozess (Sputtern, Bedampfen, Gasphasenabscheidung) aufgebracht.

Alternativ kann die Schicht b) als HRI- (high refractive index) Schicht ausgeführt sein. Diese HRl-Schicht kann vorzugsweise aus einer Lackschicht mit hohem Brechungsindex, oder aus einer Schicht aus Metallverbindungen bestehen. Geeignete Metallverbindungen sind beispielsweise Oxide oder Sulfide von Metallen, insbesondere TiO₂, Cr-Oxide, ZnS, Cu-Oxide, Indium-Zinnoxid, Antimon-Zinnoxid, Antimon-Zinkoxid, FTO, ZnO, Al₂O₃ oder Siliciumoxide.

Lackschichten mit hohem Brechungsindex werden vorzugsweise durch bekannte Druck- oder Beschichtungsverfahren (siehe oben) aufgebracht, HRI-Schichten aus Metallverbindungen werden vorzugsweise durch einen PVD- oder CVD- Prozess (Sputtern, Bedampfen), aufgebracht.

Anschließend wird eine Trennlackschicht c) partiell, beispielsweise in Form von Buchstaben, Zeichen, Symbolen, Linien, Guillochen, Zahlen oder Schriftzügen aufgebracht.

Als Trennlack kommen bevorzugt bekannte, schlecht haftende Lackzusammensetzungen, beispielsweise auf Basis von Cylcloolefincopolymeren, Nitrocellulose, Acrylaten, Polyvinylchlorid, Ethylenacrylatcopolymeren oder Styrolacrylaten in einem geeigneten Lösungsmittel in Frage. Zur Einstellung der Haftung werden dabei vorzugsweise chlorierte Polyolefine zugesetzt. Der Anteil der chlorierten Polyolefine in der Zusammensetzung kann 0 bis 130 Gew% im Verhältnis zum Basispolymer betragen.
Alternativ können beliebige Lacksysteme, deren Haftung durch ein Additiv, beispielsweise ein Polyacrylat-Copolymer (verfügbar z.B. unter dem Markennamen BYK-394® von Fa. BYK-Chemie GmbH) verringert wird, verwendet werden.
Ferner können auch sehr dünn aufgetragene Polyamid-, Polyethylen-, Fluorpolymerwachsschichten oder Silikonbeschichtungen verwendet werden. Die Trennlackschicht kann gegebenenfalls mit Sicherheitspigmenten wie Fluoreszenzpigmenten und dergleichen versehen sein.

Die Haftung der Trennlackschicht c) wird so eingestellt, dass sich bei Auslösen des Manipulationsnachweises die Trennlackbeschichtung c) entweder von der Schicht b) oder der Schicht d) löst, der restliche Folienaufbau an diesen Stellen jedoch in seiner Struktur erhalten bleibt. Jedenfalls ist die Haftung der Trennlackschicht c) zur Schicht b) geringer als die Haftung der semitransparenten oder HRl-Schicht b) zur Prägelackschicht a).

Die Trennlackschicht c) wird durch ein Druckverfahren, beispielsweise durch Tief-, Flexo-, Offset-, Sieb- oder Digitaldruck partiell aufgebracht.

Auf diese Trennlackschicht werden eine oder mehrere Lackschicht(en) d) mit optischen Eigenschaften vollflächig oder partiell aufgebracht.

Die optischen Eigenschaften der Schicht d), insbesondere die Farbe lässt sich durch Farbstoffe bzw. Pigmente einstellen. Als Pigmente können alle bekannten Pigmente, beispielsweise Pigmente auf anorganischer Basis, wie Titandioxid, Zinksulfid, Kaolin, Indium-Zinnoxid, Antimon-Zinnoxid, Flour-Zinnoxid, Aluminium, Chrom- und Siliciumoxide, oder Pigmente auf organischer Basis, wie Phthalocyaninblau, i-Indolidingelb, Dioxazinviolett und dergleichen als auch farbige und/oder verkapselte Pigmente in chemisch, physikalisch oder reaktiv trocknenden Bindemittelsystemen verwendet werden. Als Farbstoffe kommen beispielsweise 1,1- oder 1,2- Chrom-Cobalt-Komplexe in Frage.

Weiters können Effekt- bzw. Sicherheitsfarbstoffe bzw. -pigmente zum Einsatz kommen, beispielsweise lumineszierende Farbstoffe bzw. Pigmente, die im sichtbaren, im UV-Bereich oder im IR-Bereich fluoreszieren bzw. phosphoreszieren, Effektpigmente wie Flüssigkristalle, Perlglanz, Bronzen und/oder Multilayer-Farbumschlagpigmente und thermochrome Farben bzw. Pigmente verwendet werden. Diese sind einzeln oder in allen möglichen Kombinationen einsetzbar. Auch Kombinationen zwischen sichtbaren und unsichtbaren Farb- und Effekt- bzw. Sicherheitspigmenten sind denkbar.

Diese Schicht(en) d) können aber auch einen definierten Farbverlauf aufweisen, oder auch im Mehrfarbendruck partiell oder vollflächig neben- oder übereinander teilweise oder vollständig überlappend ausgeführt sein.

Die Aufbringung der farbigen Schicht(en) d) erfolgt durch ein beliebiges Verfahren, bevorzugt jedoch durch ein Druckverfahren.

Die Dicke der Farbschichten d) ergibt sich aus der gewünschten Deckkraft der Farbe in Verbindung mit dem verwendeten Druckverfahren.

Zur Erreichung des aufgabengemäßen Effekts, dass sich weder der abgezogene Teil noch der am zu sichernden Gegenstand verbleibende Teil klebrig anfühlen, wird eine weitere Trennlackschicht e) vollflächig aufgebracht. Die möglichen Zusammensetzungen der Trennlackschicht sind identisch mit den möglichen Zusammensetzungen der Trennlackschicht c).

Zu beachten ist jedoch, dass die Zusammensetzung der Trennlackschicht e) so gewählt wird, dass die Haftung zur direkt darüber- und darunterliegenden Schicht besser ist als die Haftung der Trennlackschicht c) zu den direkt darüber- und darunterliegenden Schichten. Beispielsweise kann bei Wahl eines Trennlackes auf Cycloolefincopolymer-Basis durch die Variation des Anteils an zugegebenen chlorierten Polyolefinen die Haftung sehr genau eingestellt werden. Im konkreten Fall bedeutet das, dass der Anteil an chlorierten Polyolefinen in der Schicht e) höher sein muss als in der Schicht c).

Zwischen der zweiten Trennlackschicht e) und der Selbstklebebeschichtung g) befindet sich eine weitere Lackschicht f). Die Zusammensetzung der Schicht f) kann beliebig sein, die Schicht muss jedoch eine ausreichende Eigenstabilität und in den mit Trennlack c) beschichteten Bereichen eine ausreichende Haftung zu den Schichten e) und g) aufweisen, sodass der Schichtverbund bei Auslösen des Manipulationsnachweises nicht an einer der Grenzflächen der Schicht f) zu den benachbarten Schichten e) oder g) trennt, sondern an einer der Grenzflächen der Schicht c) zu ihren benachbarten Schichten b) oder d). Die Lackschicht f) dient in erster Linie dazu, die Selbstklebebeschichtung vollständig abzudecken, damit verhindert wird, dass sich der Rückstand und der abgezogene Teil nach Auslösen des Manipulationsnachweises klebrig anfühlen. Daraus resultiert eine Dicke für die Schicht f) von etwa 3-50 µm.

Anschließend ist eine Selbstklebebeschichtung g) aufgebracht. Mit Hilfe der Selbstklebebeschichtung g) wird das Sicherheitsetikett oder -klebeband auf den zu sichernden Gegenstand oder auf die zu sichernde Verpackung aufgeklebt. Durch die unterschiedlichen partiellen Haftungsverhältnisse im Etikett zerreißt die Lackschicht d) beim Versuch, das Etikett bzw. Klebeband wieder vom zu sichernden Gegenstand abzuziehen. Ein Teil der Lackschicht d) verbleibt auf dem zu sichernden Gegenstand, der zweite Teil der Lackschicht d) wird mit dem Trägersubstrat vom Gegenstand abgezogen. Die beiden Teile verhalten sich komplementär zueinander, d.h. entweder sind auf dem abgezogenen Trägersubstrat positive und am Gegenstand negative Strukturen erkennbar, oder umgekehrt.

Folgende Randbedingungen müssen in jedem Fall eingehalten werden, um eine zuverlässige Funktion zu gewährleisten:
In den nicht mit der Trennlackschicht c) beschichteten Bereichen muss die Haftung aller Schichten untereinander und die Haftung der Schicht g) zum zu sichernden Objekt größer sein als die Haftung der Schicht d) zur Schicht e) oder der Schicht e) zur Schicht f). In den mit der Trennlackschicht c) beschichteten Bereichen muss die Haftung aller Schichten untereinander und die Haftung der Schicht g) zum zu sichernden Objekt größer sein als die Haftung der Schicht b) zur Schicht c) oder der Schicht c) zur Schicht d).
Schließlich muss die Haftung der Schicht b) zur Schicht c) oder der Schicht c) zur Schicht d) geringer sein als die Haftung sowohl der Schicht d) zur Schicht e) als auch der Schicht e) zur Schicht f), da ansonsten bei Auslösen des Manipulationsnachweises in den mit der Trennlackschicht c) beschichteten Bereichen die Lackschicht d) nicht zerreißt, sondern die Trennung vollflächig entlang einer der Grenzflächen der Lackschicht e) zu den benachbarten Schichten erfolgt.

Aufgrund der besonderen Umstände beim Auslösen des Manipulationsnachweises, die vom Hersteller des Etiketts nicht vorhergesehen werden können, können verschiedene Kombinationen der obigen Randbedingungen in ein und demselben Etikett auftreten. Die Auslegung des Etiketts wird jedoch zunächst so gewählt, dass in den beiden relevanten Bereichen (mit und ohne Trennlack c)) je einer der beiden obigen Fälle bevorzugt auftritt.

Gegebenenfalls kann auf der dem Aufbau gegenüber liegenden Oberfläche des Trägersubstrats noch ein Druckprimer aufgebracht sein, der eine nachträgliche Bedruckung eines Etiketts oder Klebebandes erleichtert bzw. ermöglicht.
Diese Bedruckung kann dabei beispielsweise aus kunden- oder produktspezifischen individuellen Daten bestehen, aber auch aus beliebigen Mustern, Zeichen, Symbolen und dergleichen.

Bei einer Verwendung als Klebeband kann gegebenenfalls auf der zweiten Oberfläche des Trägersubstrats eine Trennlackschicht aufgebracht sein um ein Aufrollen zu ermöglichen, wobei die Haftung der Selbstklebebeschichtung g) zu dieser zweiten Trennlackschicht nochmals schlechter ist als die Haftung innerhalb des durch die Schichten a) bis g) gebildeten Verbundes.

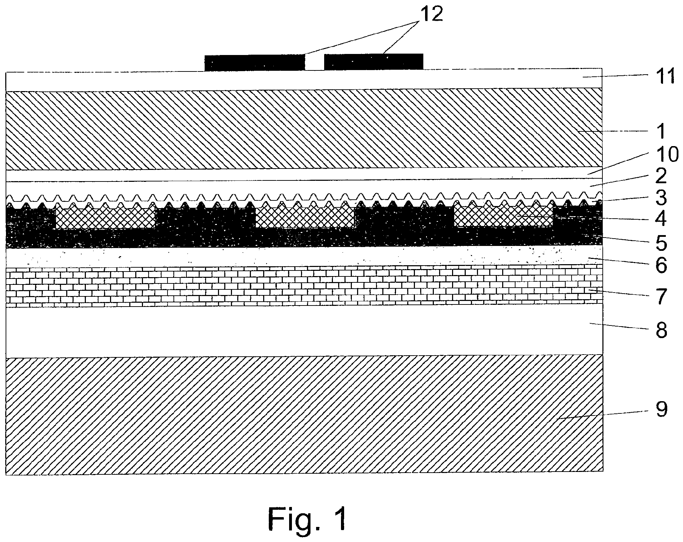

In den Figuren 1 bis 5 sind erfindungsgemäße Ausführungsformen dargestellt.

### Dabei bedeuten

1 das Trägersubstrat
2 eine Lackschicht mit einer optisch aktiven Struktur (beispielsweise ein Hologramm)
3 eine semitransparente Metallschicht oder eine HRI Schicht
4 die partielle Trennlackschicht
5 die Schicht mit optischen Eigenschaften
6 die zweite, vollflächige Trennlackschicht
7 eine vollflächige Lackschicht
8 eine Selbstklebebeschichtung
9 den Gegenstand, auf den das Etikett oder Klebeband aufgebracht ist
10 eine (optionale) Haftvermittlerschicht
11 eine (optionale) Druckprimerschicht
12 eine kundenspezifische Bedruckung
13 der Teil des Etiketts, der mit dem Trägersubstrat 1 abgezogen wird
14 der Teil des Etiketts, der auf dem zu sichernden Gegenstand 9 verbleibt
15, 16, 17, 18 Bereiche mit unterschiedlichen Haftungsverhältnissen
19 das erfindungsgemäße Sicherheitsetikett
20 der Teil der Schicht mit optischen Eigenschaften 5, der am zu sichernden Gegenstand 9 verbleibt und negative Aussparungen in Form von Zeichen aufweist
21 der Teil der Schicht mit optischen Eigenschaften 5 in Form von positiven Zeichen, der mit dem Trägersubstrat 1 abgezogen wird

Figur 1 zeigt im Querschnitt den Aufbau eines Etiketts in aufgeklebtem Zustand. Figur 2 und 3 zeigen ebenfalls im Querschnitt den Zustand nach Auslösen des Manipulationsnachweises mit unterschiedlichen erfindungsgemäßen Auslösemechanismen. Figur 4 zeigt ein erfindungsgemäßes Sicherheitsetikett in Aufsicht, Figur 5 zeigt das selbe Sicherheitsetikett mit teilweise ausgelöstem Manipulationsnachweis.

In Figur 1 ist ein erfindungsgemäßes Etikett auf einen Gegenstand 9 aufgeklebt. Das Etikett besteht aus einem Trägersubstrat 1, das auf einer Oberfläche mit einem Druckprimer 11 beschichtet ist und anschließend mit einem sichtbaren Motiv 12 bedruckt ist. Auf der gegenüberliegenden Oberfläche befinden sich zunächst eine Haftvermittlerschicht 10, eine geprägte Lackschicht 2 und eine semitransparente metallische Schicht oder eine Schicht mit hohem Brechungsindex 3.

Auf die Schicht 3 ist anschließend eine partielle Trennlackschicht 4 aufgebracht, die von einer vollflächigen Schicht mit optischen Eigenschaften 5 bedeckt ist. Danach folgen die zweite Trennlackschicht 7 und die Selbstklebebeschichtung 8, mit der das Etikett auf dem zu sichernden Gegenstand 9 befestigt ist.

In Figur 1 ist ein Beispiel gezeigt, bei dem der Benutzer die optisch aktive Struktur durch das Trägersubstrat 1 hindurch betrachtet, das Trägersubstrat 1 ist dazu zweckmäßigerweise transparent ausgeführt. Durch die semitransparente Metallschicht bzw. die HRl-Schicht 3 wird das Licht an der Grenzfläche zur Schicht 2 teilweise reflektiert und der diffraktive Effekt der optisch aktiven Struktur für den Betrachter sichtbar. Durch die teilweise Durchlässigkeit der Schicht für sichtbares Licht ist aber auch noch die darunterliegende Schicht mit optischen Eigenschaften 5 erkennbar. Somit überlagern sich die optisch aktive Struktur und die Farbschicht in günstiger Art und Weise. Für den Betrachter entsteht letztendlich der Eindruck eines Hologramms mit färbigem Hintergrund, das jedoch nicht keinen metallischen Glanz aufweist, der ansonsten charakteristisch für herkömmliche geprägte und metallisierte Hologramme ist.

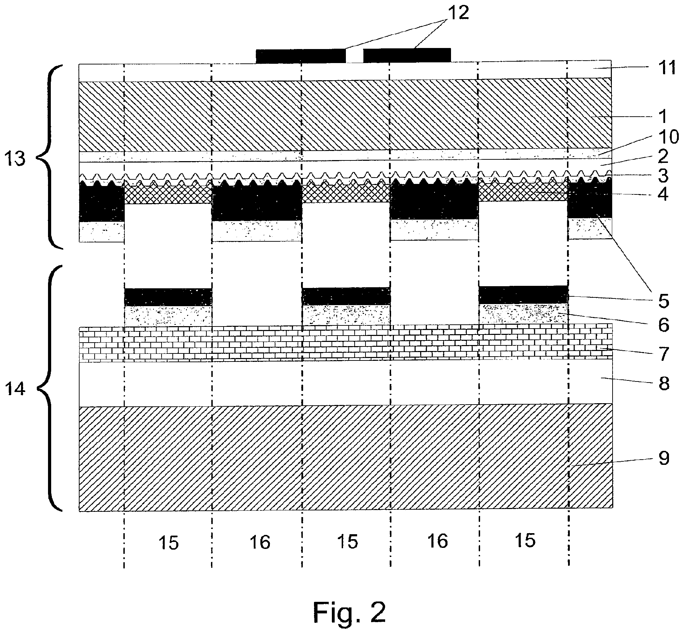

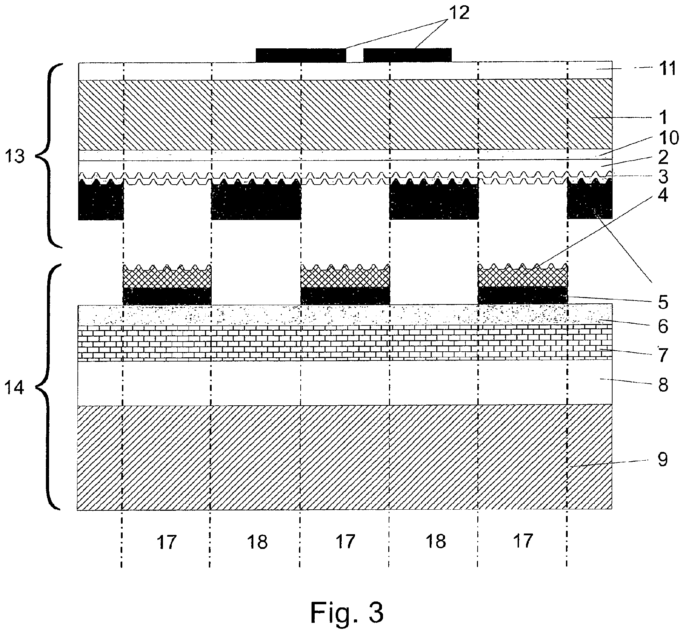

In den Figuren 2 und 3 wurde der Manipulationsnachweis durch Abziehen des Etiketts ausgelöst. Es ist deutlich erkennbar, dass Teile der Schicht mit optischen Eigenschaften 5 auf dem zu sichernden Gegenstand 9 verbleiben, und zwar genau in den Bereichen, in denen die Trennlackschicht 4 aufgebracht ist. In den Bereichen ohne Trennlackschicht 4 bleibt die Schicht mit optischen Eigenschaften 5 auf dem abgezogenen Trägersubstrat 1 und dem darauf aufgebrachten Hologramm. Dieses "Zerreissen" der Schicht 5 ergibt für den Betrachter einen optischen Manipulationsnachweis in Form von Buchstaben, Zeichen, Symbolen, Linien, Guillochen, Zahlen oder Schriftzügen.
Die Figuren 2 und 3 unterscheiden sich in der genauen Ausformung der Haftungsverhältnisse der einzelnen Schichten untereinander. Die Bereiche 15 bis 17 verdeutlichen diese erfindungsgemäßen Haftungsverhältnisse zwischen den einzelnen Schichten, die beim Auslösen des Manipulationsnachweises zur Sichtbarmachung des optischen Effekts führen.
Im Bereich 15 trennt sich der Verbund zwischen der Trennlackschicht 4 und der Schicht mit optischen Eigenschaften 5, das bedeutet, dass die Haftung zwischen den Schichten 4 und 5 niedriger ist als die Haftung aller anderen Schichten untereinander und als die Haftung der Selbstklebebeschichtung 8 zum Gegenstand 9. Die Schicht mit optischen Eigenschaften 5 verbleibt also im Bereich 15 gemeinsam mit den Schichten 6 bis 8 auf dem zu sichernden Gegenstand 9.
Im Bereich 16 trennt sich der Verbund an der Grenzfläche zwischen der zweiten Trennlackschicht 6 und der Lackschicht 7, das heißt, die Haftung der Trennlackschicht 6 zur Lackschicht 7 ist geringer als die Haftung aller anderen Schichten untereinander und als die Haftung der Selbstklebebeschichtung 8 zum Gegenstand 9. Die Schicht mit optischen Eigenschaften 5 verbleibt also im Bereich 16 gemeinsam mit der Primerschicht 10, der Prägelackschicht 2, der semitransparenten metallischen bzw. HRI-Schicht 3 und der Trennlackschicht 6 auf dem abgezogenen Trägersubstrat 1.
Im Bereich 17 trennt sich der Verbund zwischen der semitransparenten metallischen oder HRI-Schicht 3 und der Trennlackschicht 4, das bedeutet, dass die Haftung zwischen den Schichten 3 und 4 niedriger ist als die Haftung aller anderen Schichten untereinander und als die Haftung der Selbstklebebeschichtung 8 zum Gegenstand 9. Die Schicht mit optischen Eigenschaften 5 verbleibt also im Bereich 17 gemeinsam mit der Trennlackschicht 4 und den Schichten 6 bis 8 auf dem zu sichernden Gegenstand 9.
Im Bereich 18 trennt sich der Verbund zwischen der Schicht mit optischen Eigenschaften 5 und der Trennlackschicht 6, das heißt, die Haftung zwischen den Schichten 5 und 6 ist geringer als die Haftung aller anderen Schichten untereinander und als die Haftung der Selbstklebebeschichtung 8 zum Gegenstand 9. Die Schicht mit optischen Eigenschaften 5 verbleibt also im Bereich 18 gemeinsam mit der Primerschicht 10, der Prägelackschicht 2 und der semitransparenten metallischen bzw. HRI-Schicht 3 auf dem abgezogenen Trägersubstrat 1.

Die obigen Haftungsverhältnisse müssen nicht notwendigerweise wie in Figur 2 und 3 gezeigt kombiniert sein, sondern können auch in der Kombination der Situation von Bereich 15 mit Bereich 18 oder in Kombination der Situation von Bereich 17 mit Bereich 16 auftreten. Je nach Ausformung des erfindungsgemäßen Etiketts tritt bevorzugt eine bestimmte Kombination der Haftungen auf, es kann aber aufgrund der unvorhersehbaren Art und Weise, wie der Manipulationsnachweis im Detail aktiviert, also wie das Trägersubstrat abgezogen wird, auch dazu kommen, dass alle gezeigten Trennsituationen der Bereiche 15 bis 18 auf ein und demselben Etikett gleichzeitig auftreten.

Es ist klar erkennbar, dass die Selbstklebebeschichtung 8 nach Auslösen des Manipulationsnachweises immer von weiteren Schichten, mindestens jedoch von der Lackschicht 7 abgedeckt ist. Greift man also den Teil 14 des Etiketts an, so fühlt sich dieser trocken und nicht klebrig an. Im Detail ist es nun unerheblich, welche der Schichten 4 bis 6 noch zusätzlich am Teil 14 verbleiben, da alle diese Schichten die Eigenschaft haben, nicht klebrig im Sinne einer Selbstklebebeschichtung zu sein.

Versucht man nun, den Teil 13 des Etiketts am Teil 14 wieder zu befestigen, wird man feststellen, dass dies nur schwerlich möglich ist, da die Teile nicht mehr aneinander haften. Versucht man, dies mittels eines Klebstoffes zu umgehen, so ist es sehr schwierig, den Teil 13 so am Teil 14 zu befestigen, dass sich die komplementären Teile der Schicht 5, die sich einmal am Teil 13 und einmal am Teil 14 befinden, so ergänzen, dass der Eindruck einer durchgehenden Schicht 5 entsteht. Darüberhinaus würde man bei einer Kontrolle sofort feststellen, dass der Manipulationsnachweis nicht mehr erfindungsgemäß funktioniert, wenn man versucht, das Trägersubstrat erneut abzuziehen.

Die Tatsache, dass der Teil 14 des Etiketts nicht mehr klebrig ist, kann ein weiterer Vorteil für den Benutzer sein, wenn der zu sichernde Gegenstand nach Auslösen des Manipulationsnachweises weiter verwendet wird. Als Beispiel sei hier eine Verwendung zum Nachweis der Ein- und Ausreise in einen Staat in einem Reisepass genannt. Bei der Einreise wird ein solches Etikett zunächst mit den Visumsdaten bedruckt und in den Reisepass geklebt. Nach Beendigung des Aufenthalts wird durch ein offizielles Organ der Manipulationsnachweis ausgelöst, wodurch die Ausreise offiziell bestätigt wird. Dazu kann beispielsweise die Trennlackschicht 4 in Form eines Texts "Ausgereist" gedruckt werden. Damit ist klar erkennbar, dass ein Aufenthalt in dem jeweiligen Staat stattgefunden hat. Klappt man nun nach Abziehen des Teils 13 den Reisepass wieder zu, verkleben die Seiten des Passes nicht, da der Teil 14 nicht mehr klebrig ist.

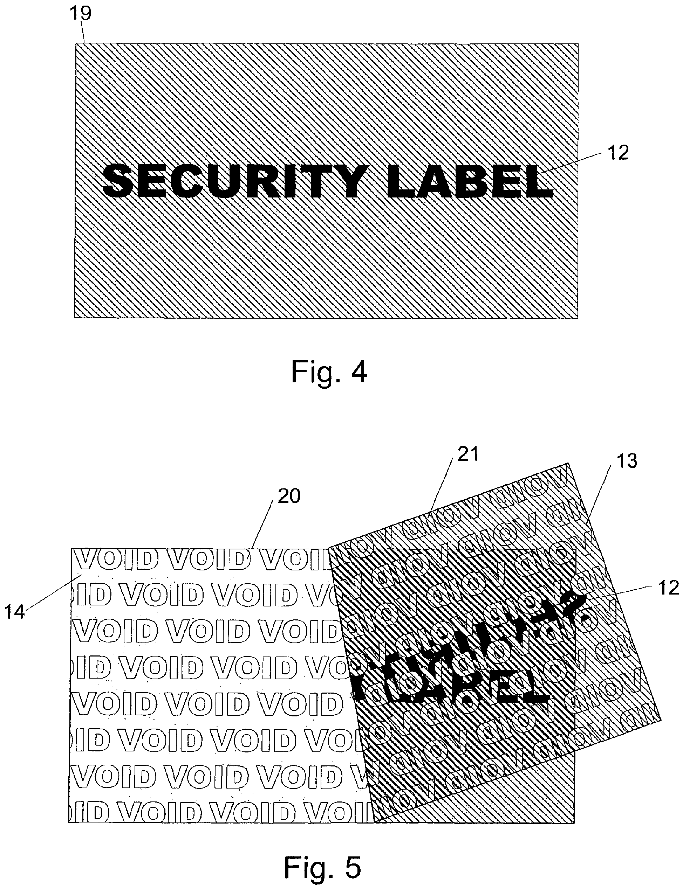

Figur 4 zeigt das erfindungsgemäße Sicherheitsetikett 17 in Aufsicht, auf dessen Sichtseite ein kundenspezifischer Druck 16 aufgebracht ist, in aufgeklebtem Zustand vor einer Manipulation.

Figur 5 zeigt das erfindungsgemäße Sicherheitsetikett in teilweise abgezogenem Zustand, das heißt bei teilweise aktiviertem Manipulationsnachweis. Auf dem zu sichernden Gegenstand verbleibt der Teil 14 des Etiketts, der Aussparungen in der Schicht mit optischen Eigenschaften 5 in Form von negativen Zeichen 20 ("VOID") aufweist. Der auf dem abgezogenen Teil des Etiketts 13 verbleibende Teil der Schicht mit optischen Eigenschaften 5 liegt in Form von positiven Zeichen 21 vor.

### Beispielaufbau 1 (bedruckbares Sicherheitsetikett):

| Bezugszeichen | Schicht | Dicke / Auftragsgewicht | Zusammensetzung |
|---|---|---|---|
| 11 | Druckprimer | 1 g/m² | Polyester-basierendes Lacksystem, vernetzend, Lösemittel Methylethylketon |
| 1 | Trägersubstrat | 50 µm | PET |
| 10 | Primer | 0,5 g/m² | Acrylat-basiertes Lacksystem mit Isocyanaten vernetzt, Lösemittel Ethylacetat |
| 2 | UV-Lack mit Hologrammprägung | 3 g/m² | Acrylat-basiertes Lacksystem mit Photoinitiator, unverdünnt |
| 3 | Semitransparente Metallschicht | 0,5 OD (ca. 6,5 nm) | Aluminium, aufgedampft |
| 4 | Trennlack partiell | 1 µm | Cycloolefincopolymer mit 20% chlorierten Polyolefinen, Lösemittel Xylol |
| 5 | Färbiger, pigmentierter Lack | 4 g/m² | Lack auf PVC-Bindemittelbasis mit 15 % roten Farbpigmenten, Lösemittel Ethylacetat |
| 6 | Trennlack vollflächig | 1 µm | Cycloolefincopolymer mit 60% chlorierten Polyolefinen, Lösemittel Xylol |
| 7 | Lackschicht | 7 g/m² | Transparenter Lack auf PVC-Bindemittelbasis, Lösemittel Ethylacetat |
| 8 | Selbstklebebeschichtung | 10 g/m² | |

### Beispielaufbau 2 (Sicherheitsetikett):

| Bezugszeichen | Schicht | Dicke / Auftragsgewicht | Zusammensetzung |
|---|---|---|---|
| 1 | Trägersubstrat | 23 µm | PET, einseitig chemisch vorbehandelt |
| 2 | UV-Lack mit Hologrammprägung | 3 g/m² | Acrylat-basiertes Lacksystem mit Photoinitiator, unverdünnt |
| 3 | HRI-Beschichtung | 50 nm | ZnS, aufgedampft |
| 4 | Trennlack partiell | 0,2 µm | Lack auf Silikonbasis, Lösemittel Methylethylketon |
| 5 | Mehrfarbdruck, partiell nebeneinander | Je Farbe 4 g/m² | Lacke auf PVC-Bindemittelbasis mit je 15% roten, blauen oder weißen Farbpigmenten, Lösemittel Ethylacetat |
| 6 | Trennlack vollflächig | 1 µm | Cycloolefincopolymer mit 50% chlorierten Polyolefinen, Lösemittel Xylol |
| 7 | Lackschicht | 7 g/m² | Transparenter Lack auf Acrylat-Bindemittelbasis, Lösemittel Ethylacetat |
| 8 | Selbstklebebeschichtung | 10 g/m² | |

### Beispielaufbau 3 (Sicherheitsklebeband):

| Bezugszeichen | Schicht | Dicke / Auftragsgewicht | Zusammensetzung |
|---|---|---|---|
| | Trennlackschicht | 0,1 g/m² | Silikonbeschichtung |
| 1 | Trägersubstrat | 23 µm | PET |
| 10 | Primer | 0,5 g/m² | Acrylat-basiertes Lacksystem mit Isocyanaten vernetzt, Lösemittel Ethylacetat |
| 2 | Heißprägelack | 3 g/m² | PMMA-basiertes Lacksystem, Lösemittel Ethylacetat |
| 3 | Semitransparente Metallschicht | 0,5 OD (ca. 6,5 nm) | Aluminium, aufgedampft |
| 4 | Trennlack partiell | 1 µm | PVC-basierter Lack mit 2% Haftungsadditiv (Polyacrylat-Copolymer) in Lösemittel Ethylacetat |
| 5 | Färbiger Lack mit Farb- und UV-Pigmenten | 3 g/m² | Lack auf Nitrocellulose-Bindemittelbasis mit 10% gelben Farbpigmenten und 10% unter UV-Licht rot fluoreszierenden |
| | | | Pigmenten, Lösemittel Ethylacetat |
| 6 | Trennlack vollflächig | 1 µm | PVC-basierter Lack mit 4% Haftungsadditiv (Polyacrylat-Copolymer) in Lösemittel Ethylacetat |
| 7 | Lackschicht | 5 g/m² | Transparenter Lack auf Nitrocellulose-Bindemittelbasis, Lösemittel Ethylacetat |
| 8 | Selbstklebebeschichtung | 15 g/m² | |

## Patentansprüche

1. Sicherheitsetikett oder -klebeband mit Manipulationsnachweis aufweisend ein flexibles Trägersubstrat auf Basis einer flexiblen Kunststofffolie, **dadurch gekennzeichnet, dass** auf eine Oberfläche des Trägersubstrats (1) Schichten in folgender Reihenfolge aufgebracht sind:
a) eine geprägte Lackschicht (2)
b) eine semitransparente Metallschicht bzw. eine Schicht mit hohem Brechungsindex (3),
c) eine erste, partielle Trennlackschicht in Form von Buchstaben, Zeichen, Symbolen, Linien, Guillochen, Zahlen oder Schriftzügen (4),
d) eine oder mehrere Lackschicht(en) mit optischen Eigenschaften (5),
e) eine zweite, vollflächige Trennlackschicht (6),
f) eine weitere vollflächige Lackschicht (7),
g) eine Selbstklebebeschichtung (8),
wobei in den nicht mit der ersten Trennlackschicht (4) beschichteten Bereichen die Haftung aller Schichten untereinander und die Haftung der Selbstklebebeschichtung (8) zum zu sichernden Gegenstand (9) größer sind als die Haftung der Lackschicht mit optischen Eigenschaften (5) zur zweiten Trennlackschicht (6) oder der zweiten Trennlackschicht (6) zur weiteren Lackschicht (7)
und wobei in den mit der ersten Trennlackschicht (4) beschichteten Bereichen die Haftung aller Schichten untereinander und die Haftung der Selbstklebebeschichtung (8) zum zu sichernden Gegenstand (9) größer sind als die Haftung der Metallschicht bzw. Schicht mit hohem Brechungsindex (3) zur ersten Trennlackschicht (4) oder der ersten Trennlackschicht (4) zur Lackschicht mit optischen Eigenschaften (5)
und wobei insbesondere die Haftung der Metallschicht bzw. Schicht mit hohem Brechungsindex (3) zur ersten Trennlackschicht (4) oder der ersten Trennlackschicht (4) zur Lackschicht mit optischen Eigenschaften (5) geringer ist als die Haftung sowohl der Lackschicht mit optischen Eigenschaften (5) zur zweiten Trennlackschicht (6) als auch der zweiten Trennlackschicht (6) zur weiteren Lackschicht (7).

2. Sicherheitsetikett oder -klebeband nach Anspruch 1 , **dadurch gekennzeichnet, dass** das Trägersubstrat (1) aus einer transparenten Kunststofffolie besteht.

3. Sicherheitsetikett oder -klebeband nach einem der Ansprüche 1 bis 2, **dadurch gekennzeichnet, dass** auf der anderen Oberfläche des Trägersubstrats (1) eine Druckprimerschicht (11) aufgebracht ist.

4. Sicherheitsetikett oder -klebeband nach einem der Ansprüche 1 bis 2, **dadurch gekennzeichnet, dass** auf der anderen Oberfläche des Trägersubstrats (1) eine Trennlackschicht aufgebracht ist.

5. Sicherheitsetikett oder -klebeband nach einem der Ansprüche 1 bis 4, **dadurch gekennzeichnet, dass** zwischen Trägersubstrat (1) und geprägter Lackschicht (2) eine Haftvermittlerschicht (10) situiert ist.

6. Sicherheitsetikett oder -klebeband nach einem der Ansprüche 1 bis 4, **dadurch gekennzeichnet, dass** zwischen Trägersubstrat (1) und geprägter Lackschicht (2) eine Releaseschicht situiert ist.

7. Sicherheitsetikett oder -klebeband nach einem der Ansprüche 1 bis 6, **dadurch gekennzeichnet, dass** die Lackschicht mit optischen Eigenschaften (5) im Mehrfarbendruck, als Farbverlaufsschicht und/oder als Schicht mit Effekt bzw. Sicherheitsfarbstoffen oder -pigmenten ausgeführt ist.

8. Sicherheitsetikett oder -klebeband nach einem der Ansprüche 1 bis 7, **dadurch gekennzeichnet, dass** nach Auslösen des Manipulationsnachweises auf dem zu sichernden Gegenstand (9) positive und auf dem abgezogenen Trägersubstrat (1) negative Buchstaben, Zeichen, Symbolen, Linien, Guillochen, Zahlen oder Schriftzüge oder umgekehrt erkennbar werden.

9. Sicherheitsetikett oder -klebeband nach einem der Ansprüche 1 bis 8, **dadurch gekennzeichnet, dass** die Metallschicht bzw. Schicht mit hohem Brechungsindex (3) eine semitransparente Metallschicht aus Al, Cu, Fe, Ag, Au, Cr, Ni, Zn, Sn, Pt, Ti, Pd oder aus einer Legierung dieser Metalle ist.

10. Sicherheitsetikett oder -klebeband nach einem der Ansprüche 1 bis 8, **dadurch gekennzeichnet, dass** die Metallschicht bzw. Schicht mit hohem Brechungsindex (3) eine HRI-Schicht aus einer Metallverbindung ist.

11. Sicherheitsetikett oder -klebeband nach einem der Ansprüche 1 bis 8, **dadurch gekennzeichnet, dass** die Metallschicht bzw. Schicht mit hohem Brechungsindex (3) eine HRI-Lackschicht ist.

12. Sicherheitsetikett oder -klebeband nach einem der Ansprüche 1 bis 11, **dadurch gekennzeichnet, dass** die geprägte Lackschicht (2) eine geprägte UV- Lackschicht ist.

13. Sicherheitsetikett oder -klebeband nach einem der Ansprüche 1 bis 12, **dadurch gekennzeichnet, dass** die geprägte Lackschicht (2) eine Heißprägelackschicht ist.

14. Sicherheitsetikett oder -klebeband nach einem der Ansprüche 1 bis 13, **dadurch gekennzeichnet, dass** die partielle Trennlackschicht (4) und die vollflächige Trennlackschicht (6) aus denselben Komponenten in unterschiedlichen Mischungsverhältnissen bestehen.

15. Sicherheitsetikett oder -klebeband nach einem der Ansprüche 1 bis 13, **dadurch gekennzeichnet, dass** die partielle Trennlackschicht (4) und die vollflächige Trennlackschicht (6) aus Lacken unterschiedlicher Zusammensetzung bestehen.

16. Sicherheitsetikett oder -klebeband nach einem der Ansprüche 1 bis 15, **dadurch gekennzeichnet, dass** das Etikett oder Klebeband auf der Druckprimerschicht (11) oder der nicht beschichteten Oberfläche des Trägersubstrats (1) bedruckt ist.

17. Sicherheitsetikett oder -klebeband nach einem der Ansprüche 1 bis 16, **dadurch gekennzeichnet, dass** die geprägte Lackschicht (2) eine Prägung in Form eines Hologramm, einer Beugungsstruktur oder eines Beugungsgitters aufweist.

18. Sicherheitsetikett oder -klebeband nach Anspruch 17, **dadurch gekennzeichnet, dass** es den optischen Eindruck eines Hologramms mit färbigem Hintergrund vermittelt und keinen metallisch reflektierenden Charakter besitzt.

## Claims

1. A tamper-evident adhesive security tape or label comprising a flexible backing substrate based on a flexible polymeric film, **characterized in that** one surface of the backing substrate (1) bears layers applied in the following order:
a) an embossed varnish layer (2),
b) a semitransparent metal layer or a high refractive index layer (3),
c) a first, partial release varnish layer in the form of letters, signs, symbols, lines, guilloches, numbers or writing (4),
d) one or more varnish layers having optical properties (5),
e) a second, full-area release varnish layer (6),
f) a further full-area varnish layer (7),
g) a self-adhesive coating (8),
wherein, in the regions not coated with the first release varnish layer (4), the adhesion of all layers to one another and the adhesion of the self-adhesive coating (8) to the object to be secured (9) are greater than the adhesion of the layer having optical properties (5) to the second release varnish layer (6) or of the second release varnish layer (6) to the further varnish layer (7),
and wherein, in the regions coated with the first release varnish layer (4), the adhesion of all layers to one another and the adhesion of the self-adhesive coating (8) to the object to be secured (9) are greater than the adhesion of the metal layer or the high refractive index layer (3) to the first release varnish layer (4) or of the first release varnish layer (4) to the varnish layer having optical properties (5),
and wherein in particular the adhesion of the metal layer or a high refractive index layer (3) to the first release varnish layer (4) or of the first release varnish layer (4) to the layer having optical properties (5) is lower than the adhesion both of the layer having optical properties (5) to the second release varnish layer (6) and of the second release varnish layer (6) to the further varnish layer (7).

2. The tamper-evident adhesive security tape or label according to claim 1, **characterized in that** the backing substrate (1) consists of a transparent polymeric film.

3. The tamper-evident adhesive security tape or label according to any of claims 1 to 2, **characterized in that** the other surface of the backing substrate (1) bears a print primer layer (11).

4. The tamper-evident adhesive security tape or label according to any of claims 1 to 2, **characterized in that** the other surface of the backing substrate (1) bears a release varnish layer.

5. The tamper-evident adhesive security tape or label according to any of claims 1 to 4, **characterized in that** an adhesion promoter layer (1) is situated between the backing substrate (1) and the embossed varnish layer (2).

6. The tamper-evident adhesive security tape or label according to any of claims 1 to 4, **characterized in that** a release layer is situated between the backing substrate (1) and the embossed varnish layer (2).

7. The tamper-evident adhesive security tape or label according to any of claims 1 to 6, **characterized in that** the varnish layer having optical properties (5) is formed by multicolor printing, as a color gradation layer and/or as a layer comprising effect dyes or pigments or comprising security dyes or pigments.

8. The tamper-evident adhesive security tape or label according to any of claims 1 to 7, **characterized in that** letters, signs, symbols, lines, guilloches, numbers or writing become recognizable that are positive on the article to be secured (9) and negative on the removed backing substrate (1), or vice versa, after triggering of the tamper evidence feature.

9. The tamper-evident adhesive security tape or label according to any of claims 1 to 8, **characterized in that** the metal layer or the high refractive index layer (3) is a semitransparent metal layer comprising Al, Cu, Fe, Ag, Au, Cr, Ni, Zn, Sn, Pt, Ti, Pd or an alloy of these metals.

10. The tamper-evident adhesive security tape or label according to any of claims 1 to 8, **characterized in that** the metal layer or the high refractive index layer (3) is an HRI layer comprising a metal compound.

11. The tamper-evident adhesive security tape or label according to any of claims 1 to 8, **characterized in that** the metal layer or the high refractive index layer (3) is an HRI varnish layer.

12. The tamper-evident adhesive security tape or label according to any of claims 1 to 11, **characterized in that** the embossed varnish layer (2) is an embossed UV varnish layer.

13. The tamper-evident adhesive security tape or label according to any of claims 1 to 12, **characterized in that** the embossed varnish layer (2) is a hot-stamping varnish layer.

14. The tamper-evident adhesive security tape or label according to any of claims 1 to 13, **characterized in that** the partial release varnish layer (4) and the full-area release varnish layer (6) consist of same components in different proportions.

15. The tamper-evident adhesive security tape or label according to any of claims 1 to 13, **characterized in that** the partial release varnish layer (4) and the full-area release varnish layer (6) consist of varnishes having different compositions.

16. The tamper-evident adhesive security tape or label according to any of claims 1 to 15, **characterized in that** the adhesive tape or label has printing on the print primer layer (11) or on the uncoated surface of the backing substrate (1).

17. The tamper-evident adhesive security tape or label according to any of claims 1 to 15, **characterized in that** the embossed varnish layer (2) has embossing in the form of a hologram, a diffractive structure or a diffraction grating.

18. The tamper-evident adhesive security tape or label according to claim 17, **characterized in that** it imparts the visual impression of a hologram with a colored background and possesses no metallically reflecting character.

## Revendications

1. Étiquette ou bande adhésive de sécurité à détection de manipulation présentant un substrat de support flexible à base d'un film en matière plastique flexible, **caractérisée en ce que** des couches sont appliquées sur une surface du substrat de support (1) dans l'ordre suivant :
a) une couche de vernis gaufrée (2)
b) une couche métallique semi-transparente ou une couche à indice de réfraction élevé (3),
c) une première couche partielle de vernis de séparation sous la forme de lettres, de signes, de symboles, de lignes, de guillochis, de chiffres ou de graphismes (4),
d) une ou plusieurs couche(s) de vernis à propriétés optiques (5),
e) une deuxième couche totale de vernis de séparation (6),
f) une autre couche totale de vernis (7),
g) un revêtement autoadhésif (8),
dans laquelle, dans les zones non revêtues de la première couche de vernis de séparation (4), l'adhérence de toutes les couches entre elles et l'adhérence du revêtement autoadhésif (8) à l'objet à sécuriser (9) sont plus grandes que l'adhérence de la couche de vernis à propriétés optiques (5) à la deuxième couche de vernis de séparation (6) ou de la deuxième couche de vernis de séparation (6) à l'autre couche de vernis (7)et
dans laquelle, dans les zones revêtues de la première couche de vernis de séparation (4), l'adhérence de toutes les couches entre elles et l'adhérence du revêtement autoadhésif (8) à l'objet à sécuriser (9) sont plus grandes que l'adhérence de la couche métallique ou de la couche à indice de réfraction élevé (3) à la première couche de vernis de séparation (4) ou de la première couche de vernis de séparation (4) à la couche de vernis à propriétés optiques (5) et
dans laquelle, en particulier, l'adhérence de la couche métallique ou de la couche à indice de réfraction élevé (3) à la première couche de vernis de séparation (4) ou de la première couche de vernis de séparation (4) à la couche de vernis à propriétés optiques (5) est plus faible que l'adhérence à la fois de la couche de vernis à propriétés optiques (5) à la deuxième couche de vernis de séparation (6) et de la deuxième couche de vernis de séparation (6) à l'autre couche de vernis (7).

2. Étiquette ou bande adhésive de sécurité selon la revendication 1, **caractérisée en ce que** le substrat de support (1) est constitué d'un film en matière plastique transparent.

3. Étiquette ou bande adhésive de sécurité selon l'une des revendications 1 à 2, **caractérisée en ce qu'**une couche de primaire d'impression (11) est appliquée sur l'autre surface du substrat de support (1).

4. Étiquette ou bande adhésive de sécurité selon l'une des revendications 1 à 2, **caractérisée en ce qu'**une couche de vernis de séparation est appliquée sur l'autre surface du substrat de support (1).

5. Étiquette ou bande adhésive de sécurité selon l'une des revendications 1 à 4, **caractérisée en ce qu'**une couche de promoteur d'adhérence (10) est située entre le substrat de support (1) et la couche de vernis gaufrée (2).

6. Étiquette ou bande adhésive de sécurité selon l'une des revendications 1 à 4, **caractérisée en ce qu'**une couche antiadhésive est située entre le substrat de support (1) et la couche de vernis gaufrée (2).

7. Étiquette ou bande adhésive de sécurité selon l'une des revendications 1 à 6, **caractérisée en ce que** la couche de vernis à propriétés optiques (5) est réalisée en impression polychrome, sous la forme d'une couche à dégradé de couleur et/ou comme une couche avec des colorants ou pigments d'effet ou de sécurité.

8. Étiquette ou bande adhésive de sécurité selon l'une des revendications 1 à 7, **caractérisée en ce que**, après le déclenchement de la détection de manipulation, des lettres, signes, symboles, lignes, guillochis, chiffres ou graphismes positifs sur l'objet à sécuriser (9) et négatifs sur le substrat de support (1) pelé, ou vice versa, deviennent visibles.

9. Étiquette ou bande adhésive de sécurité selon l'une des revendications 1 à 8, **caractérisée en ce que** la couche métallique ou la couche à indice de réfraction élevé (3) est une couche métallique semi-transparente en Al, Cu, Fe, Ag, Au, Cr, Ni, Zn, Sn, Pt, Ti, Pd ou en un alliage de ces métaux.

10. Étiquette ou bande adhésive de sécurité selon l'une des revendications 1 à 8, **caractérisée en ce que** la couche métallique ou la couche à indice de réfraction élevé (3) est une couche HRI en un composé métallique.

11. Étiquette ou bande adhésive de sécurité selon l'une des revendications 1 à 8, **caractérisée en ce que** la couche métallique ou la couche à indice de réfraction élevé (3) est une couche de vernis HRI.

12. Étiquette ou bande adhésive de sécurité selon l'une des revendications 1 à 11, **caractérisée en ce que** la couche de vernis gaufrée (2) est une couche de vernis UV gaufrée.

13. Étiquette ou bande adhésive de sécurité selon l'une des revendications 1 à 12, **caractérisée en ce que** la couche de vernis gaufrée (2) est une couche de vernis gaufrée à chaud.

14. Étiquette ou bande adhésive de sécurité selon l'une des revendications 1 à 13, **caractérisée en ce que** la couche partielle de vernis de séparation (4) et la couche totale de vernis de séparation (6) sont constituées des mêmes composants dans des rapports de mélange différents.

15. Étiquette ou bande adhésive de sécurité selon l'une des revendications 1 à 13, **caractérisée en ce que** la couche partielle de vernis de séparation (4) et la couche totale de vernis de séparation (6) sont constituées de vernis de composition différente.

16. Étiquette ou bande adhésive de sécurité selon l'une des revendications 1 à 15, **caractérisée en ce que** l'étiquette ou la bande adhésive est imprimée sur la couche de primaire d'impression (11) ou sur la surface non revêtue du substrat de support (1).

17. Étiquette ou bande adhésive de sécurité selon l'une des revendications 1 à 16, **caractérisée en ce que** la couche de vernis gaufrée (2) présente un gaufrage sous la forme d'un hologramme, d'une structure de diffraction ou d'un réseau de diffraction.

18. Étiquette ou bande adhésive de sécurité selon la revendication 17, **caractérisée en ce qu'**elle donne l'impression optique d'un hologramme avec un fond coloré et ne possède pas de caractère réfléchissant métallique.
